# EUROPEAN PATENT APPLICATION

(11) **EP 4 769 761 A1**
(43) Date of publication of application: **01.07.2026**
(21) Application number: 25848836.0
(22) Date of filing: 25.07.2025
(51) Int. Cl.: H01M 50/358, H01M 50/30, H01M 50/383, H01M 50/258, H01M 50/249

(54) **BATTERY MODULE, BATTERY PACK INCLUDING SAME, AND VEHICLE**

(30) Priority: 01.08.2024 KR 20240102651
(71) Applicant: LG ENERGY SOLUTION, LTD., Seoul 07335 (KR)
(72) Inventor: The designation of the inventor has not yet been filed
(74) Representative: Plasseraud IP
(86) International application number: PCT/KR2025/011078
(87) International publication number: WO 2026/029495

(57) **Abstract**

A battery module according to an embodiment of the present disclosure includes a cell assembly including a plurality of battery cells, a module case accommodating the cell assembly in an internal space, and a top end plate positioned on at least one side of the module case, detachably connected to the module case, and configured to discharge venting gas.

## Description

### [Technical Field]

The present disclosure relates to a battery module, a battery pack including the same, and a vehicle.

### [Background Art]

Unlike primary batteries which cannot be rechargeable, secondary batteries are rechargeable and are used not only in portable devices but also in electric vehicles (EVs) and hybrid electric vehicles (HEVs) powered by electrical power sources.

Currently, widely used secondary batteries include lithium-ion batteries, lithium polymer batteries, nickel-cadmium batteries, nickel-hydride batteries, and nickel-zinc batteries. The operating voltage of such a unit secondary battery cell, that is, a unit battery cell, is approximately 2.5 V to 4.6 V. Therefore, if a higher output voltage is required, multiple battery cells are connected in series to form a battery pack. Furthermore, depending on the required charge/discharge capacity of a battery pack, multiple battery cells may be connected in parallel to form a battery pack. Therefore, the number of battery cells included in a battery pack can vary depending on the required output voltage or charge/discharge capacity.

When multiple battery cells are connected in series or parallel to form a battery pack, it is common to first construct a battery module composed of at least one battery cell, preferably multiple battery cells and then construct a battery pack using at least one battery module and additional components. Here, a battery module refers to a component in which multiple battery cells are connected in series or parallel, and a battery pack refers to a component in which multiple battery modules are connected in series or parallel to increase capacity and output power.

Conventional battery modules typically have identical venting gas discharge paths. Therefore, in conventional battery modules and/or packs, venting gas is discharged in the same direction in case of thermal runaway. However, it is necessary to control the venting gas discharge path depending on the arrangement of adjacent battery modules.

### [Disclosure]

### [Technical Problem]

An object of the present disclosure is to provide a top end plate of a module for enhancing the degree of freedom in controlling a venting gas discharge direction.

Technical objects to be achieved by the present disclosure are not limited to the objects described above, and other objects not mentioned can be clearly understood by those skilled in the art from the description of the disclosure described below.

### [Technical Solution]

To achieve the objects, a battery module according to an embodiment of the present disclosure includes a cell assembly including a plurality of battery cells, a module case accommodating the cell assembly in an internal space, and a top end plate positioned on at least one side of the module case, detachably connected to the module case, and configured to discharge venting gas.

In one aspect of the present disclosure, the top end plate may be mounted on an upper portion of the module case.

In another aspect of the present disclosure, the top end plate may be configured to control a venting gas discharge direction.

In another aspect of the present disclosure, the top end plate may include a main body covering the upper portion of the cell assembly, at least one venting hole for discharging the venting gas, and at least one discharge bracket provided on the venting hole and configured to guide the venting gas discharge direction.

Preferably, the venting hole may include a mesh.

In one aspect of the present disclosure, the discharge bracket may be formed along the periphery of the venting hole.

In another aspect of the present disclosure, the discharge bracket may be formed in the shape of a roof with a surface curved in one direction.

In another aspect of the present disclosure, the discharge bracket may be formed in the shape of a chimney facing in one direction.

In another aspect of the present disclosure, the discharge bracket may seal the venting hole under normal conditions and open the venting hole when an internal pressure of the module case increases.

In one aspect of the present disclosure, the top end plate may be configured to discharge venting gas in different directions.

For example, the top end plate may include a plurality of discharge brackets, and the discharge brackets may be configured to discharge venting gas in different directions.

In another aspect of the present disclosure, the battery module may include a front end plate coupled to one side of the module case in the longitudinal direction and covering one end of the cell assembly in the longitudinal direction, and a rear end plate coupled to the side of the module case in the longitudinal direction and covering the other end of the cell assembly in the longitudinal direction, and the top end plate may be configured to be coupled to at least one of the front end plate or the rear end plate.

In another aspect of the present disclosure, the battery module may further include a refractory plate interposed between the module case and the cell assembly.

The present disclosure provides a battery pack including at least one battery module according to the aforementioned embodiment.

Furthermore, the present disclosure provides a vehicle including at least one battery pack according to the aforementioned embodiment.

### [Effects of the Invention]

According to the present disclosure, the degree of freedom in controlling a venting gas discharge direction in case of thermal runaway can be improved.

That is, according to the present disclosure, in a battery pack including a plurality of battery modules, the venting gas discharge path can be controlled for each battery module.

Effects achieved through the present disclosure are not limited to the aforementioned effects, and other effects not mentioned will be clearly understood by those skilled in the art from the description of the disclosure described below.

### [Description of Drawings]

The accompany drawings, which are included to provide a further understanding of the present disclosure and are incorporated on and constitute a part of this specification illustrate embodiments of the present disclosure and together with the description serve to explain the principles of the present disclosure.
FIG. 1 is a diagram illustrating a battery module according to an embodiment of the present disclosure.
FIG. 2 is an exploded perspective view of FIG. 1.
FIG. 3 is a diagram illustrating a battery cell according to an embodiment of the present disclosure.
FIG. 4 is a diagram illustrating a top end plate according to an embodiment of the present disclosure.
FIG. 5 is a cross-sectional view of the top end plate according to an embodiment of the present disclosure.
FIG. 6 is a cross-sectional view of a top end plate according to another embodiment of the present disclosure.
FIG. 7 is a diagram illustrating a top end plate according to another embodiment of the present disclosure.
FIG. 8 is a diagram illustrating a top end plate according to another embodiment of the present disclosure.
FIG. 9 is a diagram illustrating gas discharge directions of a plurality of battery modules according to an embodiment of the present disclosure.
FIG. 10 is a diagram illustrating a battery pack including the battery module of FIG. 1.
FIG. 11 is a diagram illustrating a vehicle including the battery pack of FIG. 10.

### [Mode for Carrying out the Invention]

The advantages and features of the present disclosure, and the methods for achieving the same will become clear with reference to the embodiments described below in conjunction with the accompanying drawings. However, the present disclosure is not limited to the embodiments disclosed below, but may rather be implemented in various different forms, and these embodiments are provided only to make the present disclosure complete and to fully inform those skilled in the art of the scope of the disclosure, and the present disclosure is defined only by the scope of the claims. Accordingly, in some embodiments, well-known process steps, well-known device structures, and well-known techniques are not specifically described in order to avoid ambiguity in the interpretation of the present disclosure. Like reference numerals refer to like elements throughout the specification.

In the drawings, the thickness may be enlarged to clearly express various layers and regions. Like reference numerals are used for similar parts throughout the specification. When a part, such as a layer, a film, a region, or a plate, is said to be "on" another part, this includes not only cases where it is "directly on" the other part, but also cases where there is another part in between. Conversely, when a part is said to be "directly on" another part, it means that there is no other part in between. Further, when a part, such as a layer, a film, a region, or a plate, is said to be "beneath" another part, this includes not only cases where it is "directly beneath" the other part, but also cases where there are other parts in between. Conversely, when a part is said to be "directly beneath" another part, it means that there are no other parts in between.

The statement that two compared objects are identical means "substantially identical." Therefore, "substantially identical" may include variations that are considered low in the art, for example, within 5%. Furthermore, uniformity of a parameter over a given region may mean uniformity from an average perspective.

Throughout the specification, unless otherwise specified, each component may be singular or plural.

Any component being placed "on (or below)" another component may mean not only that the component is placed in contact with the upper surface (or lower surface) of the other component, but also that a component may intervene between the other component and the component placed on (or below) the other component.

Further, when a component is described as being "connected" or "coupled" to another component, it should be understood that the components may be directly connected or coupled to each other, but that another component may also be "interposed" between the components, or that the components may be "connected" or "coupled" through another component.

Throughout the specification, "A and/or B" means A, B, or A and B, unless otherwise stated, and "C to D" means C or more and D or less, unless otherwise stated.

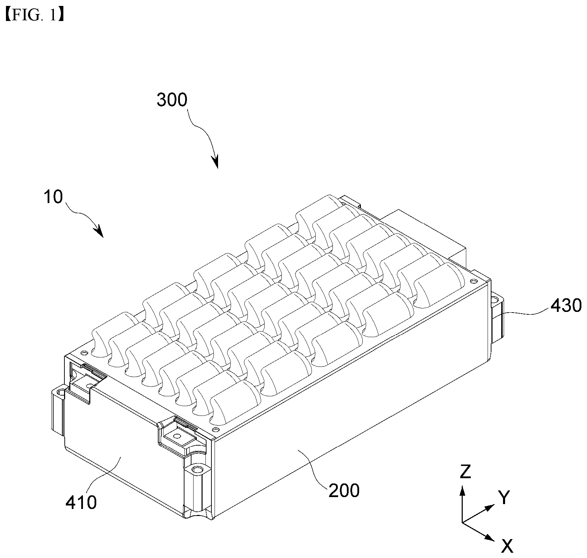

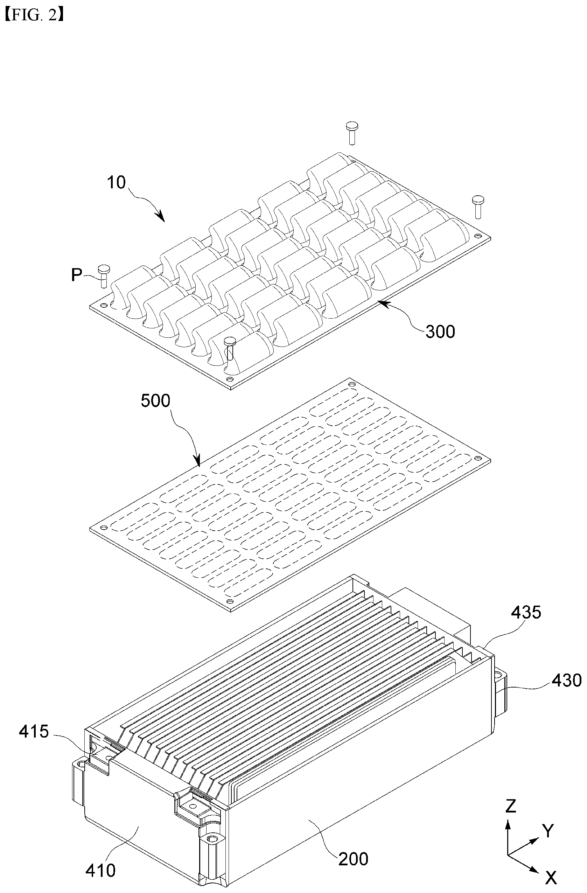

FIG. 1 is a diagram illustrating a battery module 10 according to an embodiment of the present disclosure and FIG. 2 is an exploded perspective view of FIG. 1.

Referring to FIG. 1 and FIG. 2, the battery module 10 according to the present disclosure includes a cell assembly 100, a module case 200, and a top end plate 300. In addition, the battery module 10 may further include a front end plate 410, a rear end plate 430, and/or a refractory plate 500.

The cell assembly 100 may include a plurality of battery cells 110. The plurality of battery cells 110 may be stacked in at least one direction. More specifically, the plurality of battery cells 110 may be arranged at least horizontally. The plurality of battery cells 110 may be arranged side by side in the horizontal direction while standing vertically. For example, referring to FIG. 2, the plurality of battery cells 110 may be arranged side by side in the X-axis direction while standing vertically.

Hereinafter, each of the plurality of battery cells 110 will be described in more detail.

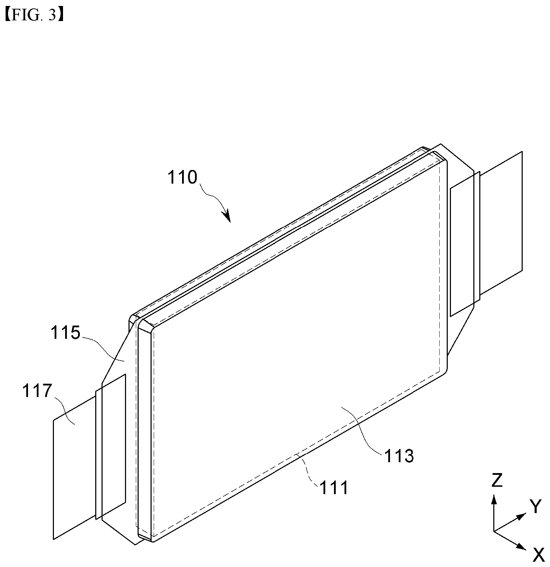

FIG. 3 is a diagram illustrating a battery cell 110 according to an embodiment of the present invention.

Referring to FIG. 3, the battery cell 110 may be a secondary battery, for example, a pouch-type battery cell 110. However, the type of the battery cell 110 is not limited, and other battery cell types, such as cylindrical cells or square cells, may also be adopted for the battery module 10 of the present disclosure.

Hereinafter, an example of a case in which the battery cell 110 is a pouch-type cell, as illustrated in FIG. 3, will be described. Referring to FIG. 3, the battery cell 110 may include an electrode assembly 111, a receiving part 113 that receives the electrode assembly 111, a sealing part 115 formed around the receiving part 113, and a pair of electrode leads 117 connected to the electrode assembly 111 and extending outward from the sealing part 115.

The pair of electrode leads 117 may be coupled to electrode tabs (not shown) provided on the electrode assembly 111 and may extend outward from the sealing part 115 through the sealing part 115. The pair of electrode leads 117 may extend in the longitudinal direction of the battery cell 110. The pair of electrode leads 117 may extend in the same direction or opposite directions.

Referring to FIG. 3, the battery cell 110 may be configured to discharge venting gas through an upper sealing part 115. The sealing part 115 may include a venting area formed to prevent an increase in internal pressure due to gas generated within the battery cell 110. The venting area is formed in a portion of the sealing part 115 and is an area structurally weaker than the surrounding area, such that it can be easily broken when internal pressure is applied. The venting area may be, for example, an area with weaker sealing than the surrounding area. In this case, the venting area may be formed on one of two edges of the sealing part 115. In particular, the venting area may be formed on the upper edge of the two edges of the sealing part 115.

With this structure, gas generated within the battery cell 110 can be discharged to the outside of the battery cell 110 through the venting area formed at the upper edge of the battery cell 110. Accordingly, the gas can be discharged to the outside of the battery module 10 via the top end plate 300 located at the upper end of the battery cell 110. In other words, according to this structure, high-temperature gas and flames within the module can be smoothly discharged.

Referring to FIG. 1 and FIG. 2, the module case 200 has an internal empty space, and the cell assembly 100 may be accommodated therein. The module case 200 may be configured to accommodate the cell assembly 100. The module case 200 may have a shape in which one side and the opposite side thereof are open in the longitudinal direction.

The module case 200 may include a base plate extending horizontally and side plates extending upward from the base plate. The base plate may have a plate shape extending approximately horizontally. The side plates may have a plate shape extending approximately vertically. The base plate and the side plates may be perpendicular to each other. That is, the module case 200 may be configured as a U-shaped frame.

The side plate may be provided in the width direction of the battery module 10. That is, the module case 200 may have the side plates provided in the width direction and the one side and opposite side open in the longitudinal direction.

In another aspect of the present disclosure, the base plate and the side plates may be configured as an integral part. Alternatively, the base plate and the side plates may be configured to be detachable.

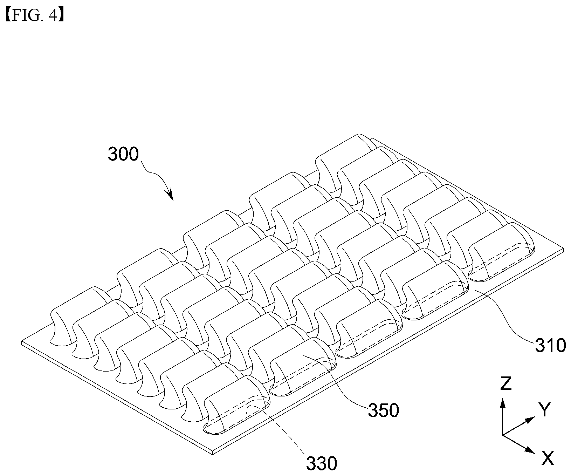

FIG. 4 is a diagram illustrating the top end plate 300 according to an embodiment of the present disclosure.

Referring to FIG. 4, the top end plate 300 may be positioned on at least one side of the module case 200. Preferably, the top end plate 300 may be mounted on the module case 200. Since the battery cell 110 has a venting area formed on the upper edge of the sealing part 115, venting gas released through the upper sealing part 115 can be easily discharged to the outside through the top end plate 300.

In one aspect of the present disclosure, the top end plate 300 may be configured to be detachably attached to the module case 200. For example, the top end plate 300 may be coupled to and/or decoupled from the front end plate 410 and/or the rear end plate 430, which will be described later. This will be described in detail below.

In another aspect of the present disclosure, the top end plate 300 may be configured to discharge venting gas. Preferably, the top end plate 300 may be configured to control a venting gas discharge direction.

Referring back to FIG. 4, the top end plate 300 may include a main body 310, a venting hole 330, and a discharge bracket 350. In this case, the top end plate 300 may include at least one venting hole 330. Furthermore, the top end plate 300 may include at least one discharge bracket 350.

The main body 310 may be configured to cover the upper portion of the cell assembly 100. For example, the main body 310 may have a plate shape extending approximately horizontally.

The venting hole 330 may be configured to discharge venting gas. That is, the venting hole 330 may have a hole shape that penetrates the main body 310 in the vertical direction. The venting hole 330 may be provided in a long shape along the sealing part 115 of the battery cell 110. This structure allows high-temperature gas and flames within the module to be smoothly discharged.

A plurality of venting holes 330 may be formed on the module case 200. For example, the plurality of venting holes 330 may be provided along the sealing part 115 of the battery cell 110.

According to this structure, even if a large amount of gas is generated within the battery module 10, the gas can be smoothly discharged to the outside of the battery module 10 through the plurality of venting holes 330. In other words, the time for which the venting gas remains within the module case 200 can be minimized.

In another aspect of the present disclosure, the venting hole 330 may include a mesh.

According to this structure, the mesh can prevent sparks generated in the cell assembly 100 from spreading outside the cell assembly 100. Furthermore, the mesh can prevent fire from spreading to other battery modules 10 adjacent to a battery module 10 where a thermal event has occurred.

In one aspect of the present disclosure, the battery module 10 may include at least one discharge bracket 350.

Referring to FIG. 4, the discharge bracket 350 may be provided on the venting hole 330. The discharge bracket 350 may be configured to guide the discharge direction of the venting gas. The discharge bracket 350 may be formed integrally with the main body 310.

In the case of conventional battery modules 10, the venting gas discharge path is the same for each module during thermal runaway, and therefore, it is necessary to control the venting gas discharge path depending on the arrangement of adjacent battery modules 10. On the other hand, according to the present disclosure, the degree of freedom in controlling the venting gas discharge direction can be improved through the structure of the discharge bracket 350 of the top end plate 300. For example, by applying discharge brackets 350 of various shapes depending on the position of a venting device and/or the arrangement of adjacent battery modules 10, the venting gas discharge path can be smoothly controlled.

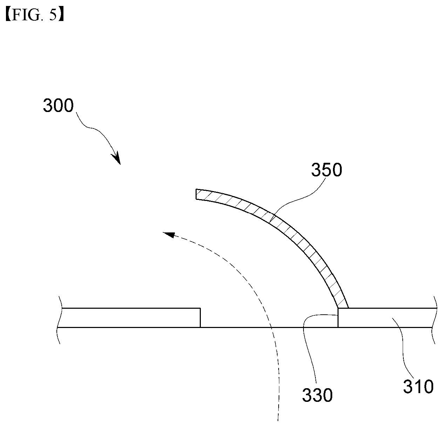

FIG. 5 is a cross-sectional view of the top end plate 300 according to an embodiment of the present disclosure.

The discharge bracket 350 may be formed along the periphery of the venting hole 330. That is, the venting hole 330 has a hole shape penetrating the main body 310 vertically. In this case, the discharge bracket 350 may be formed along the edge of the venting hole 330. For example, referring to FIG. 5, the discharge bracket 350 may be formed in a roof shape with a surface curved in one direction.

If the discharge bracket 350 is formed to have a roof shape with a surface curved in one direction in this manner, the venting gas generated within the module can be guided along the curved surface and directed to the left as shown in FIG. 5. That is, according to the above configuration, the venting gas generated in the cell assembly 100 can be guided in a certain direction. That is, according to the above configuration, the movement direction of the venting gas generated within the battery module 10 can be controlled to a desired direction.

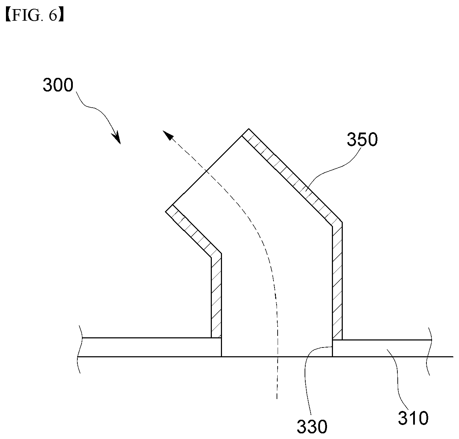

FIG. 6 is a cross-sectional view of a top end plate 300 according to another embodiment of the present disclosure.

Referring to FIG. 6, the discharge bracket 350 may be configured in a chimney shape facing in one direction. The discharge bracket 350 may be configured, for example, to have a tubular shape. In this case, the tube may be bent in one direction. In FIG. 6, the tubular discharge bracket 350 is bent to the left. Here, the bending angle of the discharge bracket 350 may be adjusted in consideration of the distance between the top end plate 300 of the battery module 10 and an upper cover of a pack case.

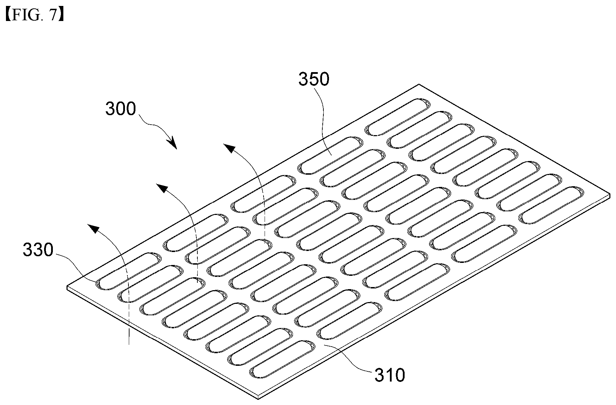

FIG. 7 is a diagram illustrating a top end plate 300 according to another embodiment of the present disclosure.

Referring to FIG. 7, the discharge bracket 350 may be configured to seal the venting hole 330 under normal conditions and open the venting hole 330 when the internal pressure of the module case 200 increases.

More specifically, the venting hole 330 remains sealed under normal conditions. For example, as shown in FIG. 7, a preliminary cut line may be formed around the venting hole 330. The preliminary cut line may be thinner or have a lower density than the surrounding area of the main body 310, and thus can be more susceptible to fracture than the surrounding area. Therefore, the preliminary cut line of the main body 310 may be formed to surround the module case 200 without being fractured under normal conditions.

According to this structure, since the top end plate 300 covers the upper portion of the module case 200, even if a thermal event occurs in an adjacent battery module 10, high-temperature gas and flame generated in the adjacent battery module 10 can be prevented from penetrating into the interior of the battery module 10. Accordingly, a thermal runaway chain reaction can be effectively blocked. Therefore, the safety of the battery module 10 and the battery pack 3 can be secured.

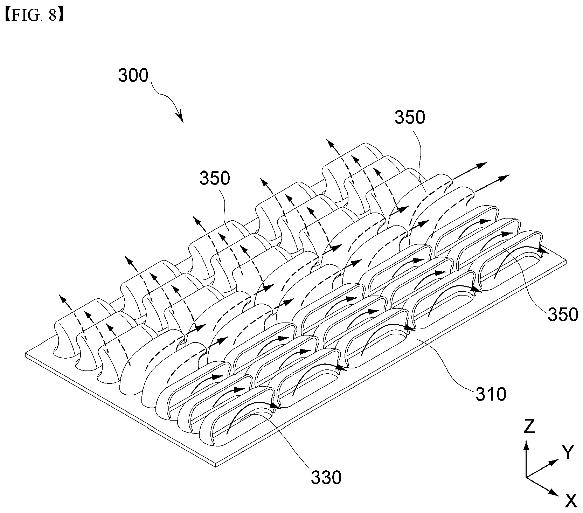

FIG. 8 is a diagram illustrating a top end plate 300 according to another embodiment of the present disclosure.

Referring to FIG. 8, the top end plate 300 may be configured to discharge venting gas in different directions. For example, the top end plate 300 may include a plurality of discharge brackets 350. In this case, the plurality of discharge brackets 350 may be configured to discharge gas in different directions.

Referring to FIG. 8, in one embodiment of the present disclosure, the top end plate 300 may include eight rows of venting holes 330 and discharge brackets 350 based on the X-axis. The top end plate 300 may include five rows of venting holes 330 and discharge brackets 350 based on the Y-axis. However, the numbers of venting holes 330 and discharge brackets 350 are not limited thereto.

Hereinafter, for convenience of description, the X-axis direction will be referred to as a left-right direction, and the Y-axis direction will be referred to as a front-back direction.

The discharge brackets 350 located in the first to third rows on the left in the X-axis direction may have a shape curved and/or folded toward the left. Accordingly, the venting gas and/or flame discharged from the battery cells 110 located in the first to third rows on the left in the X-axis direction may be discharged toward the left.

The discharge brackets 350 of the row located in the center in the X-axis direction may have a shape curved and/or bent toward the rear. More specifically, the discharge brackets 350 of the fourth and fifth rows from the left in the X-axis direction may have a shape curved and/or folded toward the rear. Accordingly, the venting gas and/or flame discharged from the battery cell 110 located in the center in the X-axis direction may be discharged toward the rear.

The discharge brackets 350 of the sixth to eighth rows from the left in the X-axis direction may have a shape curved and/or bent toward the right. Accordingly, the venting gas and/or flame discharged from the battery cells 110 located in the sixth to eighth rows from the left in the X-axis direction may be discharged toward the right.

According to the above structure, venting gas discharged from a single battery module 10 can be discharged in different directions, rather than in a single fixed direction.

However, the numbers, arrangement, and/or curvature directions of the venting holes 330 and the discharge brackets 350 are not limited to the above embodiment, and embodiments in which various numbers and/or curvature directions are applied are also within the scope of the present disclosure.

Referring back to FIG. 1 and FIG. 2, the battery module 10 may further include the front end plate 410 and/or the rear end plate 430.

The front end plate 410 may be coupled to one side of the module case 200 in the longitudinal direction to cover one end of the cell assembly 100 in the longitudinal direction. The rear end plate 430 may be coupled to the other side of the module case 200 in the longitudinal direction to cover the other end of the cell assembly 100 in the longitudinal direction.

The top end plate 300 may be configured to be coupled to at least one of the front end plate 410 and the rear end plate 430.

For example, referring to FIG. 2, the front end plate 410 may include a first joining region 415. The first joining region 415 has a structure that allows joining to the top end plate 300. Here, the top end plate 300 and the front end plate 410 may be structurally joined through a separate joining part P. Alternatively, the joining part P may be provided on the top end plate 300. In this case, the joining part P provided on the top end plate 300 may be structurally joined to the first joining region 415 of the front end plate 410. For example, the first joining region 415 may correspond to a nut, and the joining part P may correspond to a bolt. However, the joining method of the top end plate 300 is not limited thereto.

Similarly, the rear end plate 430 may include a second joining region 435. The second joining region 435 has a structure that can be joined to the top end plate 300. In this case, the top end plate 300 and the rear end plate 430 may be structurally joined through a separate joining part P. Alternatively, the joining part P may be provided on the top end plate 300. In this case, the joining part P provided on the top end plate 300 may be structurally joined to the second joining region 435 of the rear end plate 430. For example, the second joining region 435 may correspond to a nut, and the joining part P may correspond to a bolt. However, the joining method of the top end plate 300 is not limited thereto.

In one aspect of the present invention, the top end plate 300 may be configured to be detachably connected to the module case 200. For example, the top end plate 300 may be coupled to and/or decoupled from the front end plate 410 and/or the rear end plate 430, which will be described later. Alternatively, the top end plate 300 may be configured to be detachably connected to the module case 200.

For example, the top end plate 300 may include a plurality of discharge brackets 350 arranged in one direction, or may include a plurality of discharge brackets 350 arranged in different directions.

In this case, top end plates 300 of various structures may be configured to be detachably connected to the module case 200, the front end plate 410, and/or the rear end plate 430, thereby controlling a venting gas discharge direction in response to various arrangements of battery modules 10.

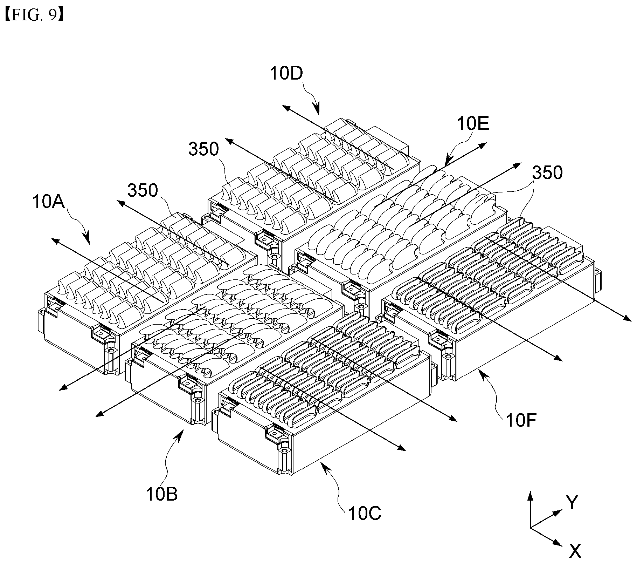

FIG. 9 is a diagram illustrating gas discharge directions of a plurality of battery modules 10 according to an embodiment of the present disclosure.

A battery pack 3 according to the present disclosure may include at least one battery module 10 according to the present disclosure described above. In this case, the battery pack 3 may include a plurality of battery modules 10. For example, FIG. 9 illustrates the structure of the battery pack 3 including six battery modules 10.

Hereinafter, for convenience of description, the X-axis direction will be referred to as the left-right direction, and the Y-axis direction will be referred to as the front-back direction.

The discharge brackets 350 of the battery module 10 in the leftmost row in the X-axis direction may be curved and/or folded toward the left. Accordingly, venting gas and/or flames discharged from the battery module 10 located farthest to the left in the X-axis direction may be discharged toward the left.

The discharge brackets 350 of the battery module 10 in the row located centrally in the X-axis direction and forward in the Y-axis direction may be curved and/or folded toward the front. Accordingly, venting gas and/or flames discharged from the battery module 10 located at the center in the X-axis direction may be discharged toward the front.

The discharge brackets 350 of the battery module 10 in the row located centrally in the X-axis direction and rearward in the Y-axis direction may be curved and/or folded toward the rear. Accordingly, the venting gas and/or flame discharged from the battery module 10 located at the center in the X-axis direction may be discharged toward the rear.

The discharge brackets 350 of the battery module 10 located in the rightmost row in the X-axis direction may have a shape curved and/or folded toward the right. Accordingly, the venting gas and/or flame discharged from the battery module 10 located in the rightmost row in the X-axis direction may be discharged toward the right.

According to the above structure, venting gas discharged from the battery modules 10 can be discharged in different directions rather than in a single fixed direction.

If the top end plate 300 is integrated with the module case 200 as in a conventional configuration, the degree of freedom in the venting gas discharge path may be reduced. On the other hand, according to the configuration of the present disclosure, the venting gas discharge path can be freely controlled by attaching or removing top end plates 300 of various shapes, depending on the position of a venting device within the battery pack 3 and/or the arrangement of adjacent battery modules 10.

Therefore, by controlling the direction of venting gas, the start time of heat propagation to adjacent battery modules 10 can be delayed. Furthermore, by controlling the direction of venting gas, the degree of freedom in the location of the venting device can be improved.

Referring back to FIG. 2, the battery module 10 may further include the refractory plate 500.

The refractory plate 500 may be made of a refractory material that can withstand high temperatures and flames. The refractory plate 500 may be made of, for example, mica material or may partially include such material.

The refractory plate 500 may be interposed between the module case 200 and the cell assembly 100. In particular, the refractory plate 500 may be positioned in the internal space of the module case 200 to cover at least one side of the cell assembly 100 accommodated in the internal space of the module case 200. In particular, the refractory plate 500 may be configured to cover at least the upper side of the cell assembly 100.

In one aspect of the present invention, the refractory plate 500 may include a venting portion at a location corresponding to the venting hole 330. The venting portion may be configured to allow gas to freely flow. This venting portion may match the venting hole 330 of the module case 200 in the refractory plate 500. For example, the venting portion may have a location, size, shape, etc. corresponding to those of the venting hole 330 of the module case 200.

According to this structure, gas discharged through the upper sealing part 115 of the battery cell 110 can be discharged to the outside of the battery module 10 through the venting portion formed on the upper side of the refractory plate 500. That is, this structure allows for the smooth discharge of high-temperature gas and flames within the module.

In another aspect of the present invention, referring to FIG. 2, the refractory plate 500 may be provided on the inner side of the portion of the module case 200 where the venting hole 330 is formed. Accordingly, the refractory plate 500 may be configured to surround the outer side of the portion of the cell assembly 100 facing the venting hole 330.

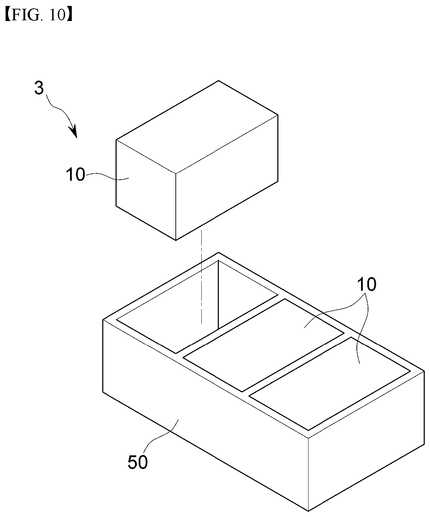

FIG. 10 is a diagram illustrating a battery pack 3 including the battery module 10 of FIG. 1.

Referring to FIG. 10, the battery pack 3 according to the present disclosure may include at least one battery module 10 according to the present disclosure described above. In addition, the battery pack 3 according to the present disclosure may include a pack case 50 capable of accommodating at least one battery module 10. In addition, the battery pack 3 may further include various components in addition to the battery module 10, such as components of the battery pack 3 known at the time of application of the present disclosure, such as a BMS, a pack case, a relay, and a current sensor.

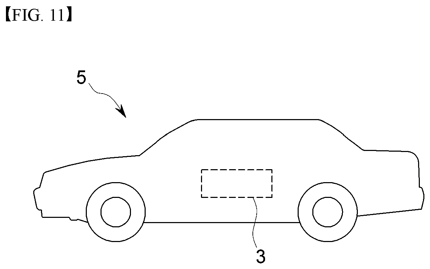

FIG. 11 is a diagram illustrating a vehicle 5 including the battery pack 3 of FIG. 10.

Referring to FIG. 11, the vehicle 5 according to the present disclosure may include at least one battery pack 3 according to the present disclosure.

The battery module 10 according to the present disclosure is applicable to the vehicle 5, such as an electric vehicle 5 or a hybrid vehicle 5. That is, the vehicle 5 according to the present disclosure may include the battery module 10 according to the present disclosure or the battery pack 3 according to the present disclosure. Furthermore, the vehicle 5 according to the present disclosure may further include various other components included in the vehicle 5 in addition to the battery module 10 or the battery pack 3. For example, the vehicle 5 according to the present disclosure may further include a body, a motor, a control device such as an electronic control unit (ECU), etc., in addition to the battery module 10 according to the present disclosure.

While terms indicating directions such as "up" and "down" are used throughout this specification, it is clear to those skilled in the art that these terms are merely for convenience of explanation and may vary depending on the location of an object being described or the position of an observer.

Although the present disclosure has been described above with reference to limited embodiments and drawings, the present disclosure is not limited thereto. Those skilled in the art will readily appreciate that various modifications and variations are possible within the scope of the technical spirit of the present disclosure and the equivalent scope of the claims set forth below.

### [Industrial Applicability]

The present disclosure can provide a battery module and a battery pack capable of improving the degree of freedom in controlling a venting gas discharge direction in case of thermal runaway.

## Claims

1. A battery module comprising:
a cell assembly including a plurality of battery cells;
a module case accommodating the cell assembly in an internal space; and
a top end plate positioned on at least one side of the module case, detachably connected to the module case, and configured to discharge venting gas.

2. The battery module of claim 1, wherein the top end plate is mounted on an upper portion of the module case.

3. The battery module of claim 1, wherein the top end plate is configured to control a venting gas discharge direction.

4. The battery module of claim 1, wherein the top end plate comprises:
a main body covering the upper portion of the cell assembly;
at least one venting hole for discharging the venting gas; and
at least one discharge bracket provided on the venting hole and configured to guide the venting gas discharge direction.

5. The battery module of claim 4, wherein the venting hole comprises a mesh.

6. The battery module of claim 4, wherein the discharge bracket is formed along the periphery of the venting hole.

7. The battery module of claim 4, wherein the discharge bracket is formed in the shape of a roof with a surface curved in one direction.

8. The battery module of claim 4, wherein the discharge bracket is formed in the shape of a chimney facing in one direction.

9. The battery module of claim 4, wherein the discharge bracket seals the venting hole under normal conditions and opens the venting hole when an internal pressure of the module case increases.

10. The battery module of claim 1, wherein the top end plate is configured to discharge venting gas in different directions.

11. The battery module of claim 4, wherein the top end plate includes a plurality of discharge brackets,
wherein the discharge brackets are configured to discharge venting gas in different directions.

12. The battery module of claim 1, further comprising:
a front end plate coupled to one side of the module case in the longitudinal direction and covering one end of the cell assembly in the longitudinal direction; and
a rear end plate coupled to the side of the module case in the longitudinal direction and covering the other end of the cell assembly in the longitudinal direction,
wherein the top end plate is configured to be coupled to at least one of the front end plate or the rear end plate.

13. The battery module of claim 1, further comprising a refractory plate interposed between the module case and the cell assembly.

14. A battery module comprising:
a cell assembly including a plurality of battery cells;
a module case accommodating the cell assembly in an internal space; and
a top end plate positioned on at least one side of the module case and configured to discharge venting gas,
wherein the top end plate comprises:
a main body covering an upper portion of the cell assembly;
at least one venting hole for discharging the venting gas; and
at least one discharge bracket provided on the venting hole and configured to guide a discharge direction of the venting gas.

15. A battery pack comprising at least one battery module of any one of claims 1 to 13.

16. A vehicle comprising at least one battery pack of claim 15.
